# EUROPEAN PATENT SPECIFICATION

(11) **EP 3 124 368 B1**
(45) Date of publication and mention of the grant of the patent: **29.11.2017**
(21) Application number: 16165204.5
(22) Date of filing: 14.04.2016
(51) Int. Cl.: B62K 11/00

(54) **METHOD AND DEVICE FOR MAKING A BALANCING TRANSPORTER STAY-PUT**
VERFAHREN UND VORRICHTUNG ZUR ERMÖGLICHUNG DER VERHARRUNG EINES BALANCIERENDEN FORTBEWEGUNGSMITTELS
PROCÉDÉ ET DISPOSITIF DE FABRICATION D'UN TRANSPORTEUR D'ÉQUILIBRAGE STAY-PUT

(30) Priority: 29.07.2015 CN 201510455016
(43) Date of publication of application: 01.02.2017
(73) Proprietor: Xiaomi Inc., Beijing 100085 (CN)
(72) Inventor: LIU, Huayijun, 100085 BEIJING (CN); TANG, Mingyong, 100085 BEIJING (CN); CHEN, Tao, 100085 BEIJING (CN)
(74) Representative: Underwood, Nicolas Patrick

(56) References cited:
- JP-A- 2006 123 854
- US-A1- 2012 166 048

## Description

### FIELD

The present invention generally relates to balancing transporter, and more particularly, to method and device for making a balancing transporter stay-put.

### BACKGROUND

With the development of technologies, using of balancing transporters has been popular in daily life.

A typical balancing transporter provided with a sensor to measure the distance of the transporter from possible obstacles is disclosed in the patent application US 2012/0166048 A1. When a person uses a balancing transporter, the person usually needs to waggle his or her body to keep the balancing transporter in a balanced state. However, when the person enters a narrow space on the balancing transporter, it would be difficult for the person to keep the balancing transporter balanced by waggling his or her body.

### SUMMARY

A method and device for making a balancing transporter stay put are provided in the invention. The illustrated embodiments are explained as below.

According to a first aspect of the present invention, a method for making a balancing transporter stay put is provided, including: acquiring distances between the balancing transporter and obstacles around the balancing transporter; determining, among the distances, a number of distances each of which has a value smaller than a predefined threshold; and starting a stay-put mode of the balancing transporter if the number reaches a predefined number, the balancing transporter being automatically kept balanced under the stay-put mode.

For example, the balancing transporter may measure a finite number of distances between the balancing transporter and its surroundings, each distance of the finite number of distances being associated with a direction.

According to an exemplary embodiment, the method may further include: prior to starting the stay-put mode of the balancing transporter, receiving a trigger signal sent by a surrounding device, the trigger signal being a signal sent to the balancing transporter by the surrounding device after the balancing transporter enters a predefined area, wherein the predefined area is a communication area within which the surrounding device and the balancing transporter communicate with each other.

According to an exemplary embodiment, the method may further include: presenting prompting information, the prompting information being used to prompt that the balancing transporter will enter the stay-put mode; detecting whether a rejection signal is received within a predefined time period, the rejection signal being used to indicate not to start the stay-put mode of the balancing transporter temporarily; suspending the start of the stay-put mode, if the rejection signal is received; and performing an operation of starting the stay-put mode of the balancing transporter, if the rejection signal is not received.

According to an exemplary embodiment, the starting may include: starting an auto-balancing system of the balancing transporter; and/or activating a braking function of the balancing transporter.

According to an exemplary embodiment, the method may further include: receiving an ending signal; and ending the stay-put mode of the balancing transporter, after receiving the ending signal.

According to a second aspect of the present invention, a device for making a balancing transporter stay put is provided, including: a distance acquisition module configured to acquire distances between the balancing transporter and obstacles around the balancing transporter; a number determination module configured to determine, among the distances, a number of distances each of which has a value smaller than a predefined threshold; and a mode start module configured to start a stay-put mode of the balancing transporter if the number reaches a predefined number, the balancing transporter being automatically kept balanced under the stay-put mode.

According to an exemplary embodiment, the device may further include a first reception module configured to receive a trigger signal sent by a surrounding device prior to starting the stay-put mode of the balancing transporter, the trigger signal being a signal sent to the balancing transporter by the surrounding device after the balancing transporter enters a predefined area, wherein the predefined area is a communication area within which the surrounding device and the balancing transporter communicate with each other.

According to an exemplary embodiment, the device may further include: an information presentation module configured to present prompting information, the prompting information being used to prompt that the balancing transporter will enter the stay-put mode; a detection module configured to detect whether a rejection signal is received within a predefined time period, the rejection signal being used to indicate not to start the stay-put mode of the balancing transporter temporarily; and a start suspension module configured to suspend the start of the stay-put mode if the detection module detects that the rejection signal is received, wherein the mode start module is further configured to perform an operation of starting the stay-put mode of the balancing transporter if the detection module detects that the rejection signal is not received.

According to an exemplary embodiment, the mode start module may include: a first start sub-module configured to start an auto-balancing system of the balancing transporter; and/or a second start sub-module configured to activate a braking function of the balancing transporter.

According to an exemplary embodiment, the device may further include: a second reception module configured to receive an ending signal; and a mode end module configured to end the stay-put mode of the balancing transporter after receiving the ending signal.

According to a third aspect of the present invention, a device for making a balancing transporter stay put is provided, including: a processor; and a memory for storing processor-executable instructions, wherein the processor is configured to: acquire distances between the balancing transporter and obstacles around the balancing transporter; determine, among the distances, a number of distances each of which has a value smaller than a predefined threshold; and start a stay-put mode of the balancing transporter if the number reaches a predefined number, the balancing transporter being automatically kept balanced under the stay-put mode.

According to a fourth aspect of the present invention, there is provided a computer program including instructions for executing the steps of a method for making a balancing transporter stay put as defined above when said program is executed by a computer.

This program can use any programming language and take the form of source code, object code or a code intermediate between source code and object code, such as a partially compiled form, or any other desirable form.

According to a fifth aspect of the present invention, there is provided a recording medium readable by a computer and having recorded thereon a computer program including instructions for executing the steps of a method for making a balancing transporter stay put as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The invention also provides a balancing transporter comprising a device as defined above.

Embodiments of the invention may provide at least some of the following beneficial effects: by acquiring distances between a balancing transporter and obstacles around the balancing transporter, and automatically starting a stay-put mode of the balancing transporter if among the distances a number of distances each of which has a value smaller than a predefined threshold reaches a predefined number, the balancing transporter can be automatically kept balanced under the stay-put mode. Therefore such a problem in the related art is solved that when a person enters a narrow space on a balancing transporter, it would be difficult for the person to keep the balancing transporter in a balanced state by waggling his or her body. As a result, a technical effect that a balancing transporter can be automatically kept balanced when the balancing transporter enters a narrow space is achieved.

It is to be understood that both the forgoing general description and the following detailed description are exemplary only, and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for making a balancing transporter stay put according to an exemplary embodiment.
Fig. 2A is a flow diagram illustrating a method for making a balancing transporter stay put according to another exemplary embodiment.
Fig. 2B is a schematic diagram illustrating prompting information according to another exemplary embodiment.
Fig. 2C is another flow diagram illustrating a method for making a balancing transporter stay put according to another exemplary embodiment.
Fig. 2D is a schematic diagram illustrating an environment, in which a balancing transporter is situated when the balancing transporter starts a stay-put mode, according to another exemplary embodiment.
Fig. 3 is a block diagram illustrating a device for making a balancing transporter stay put according to an exemplary embodiment.
Fig. 4 is a block diagram illustrating a device for making a balancing transporter stay put according to another exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

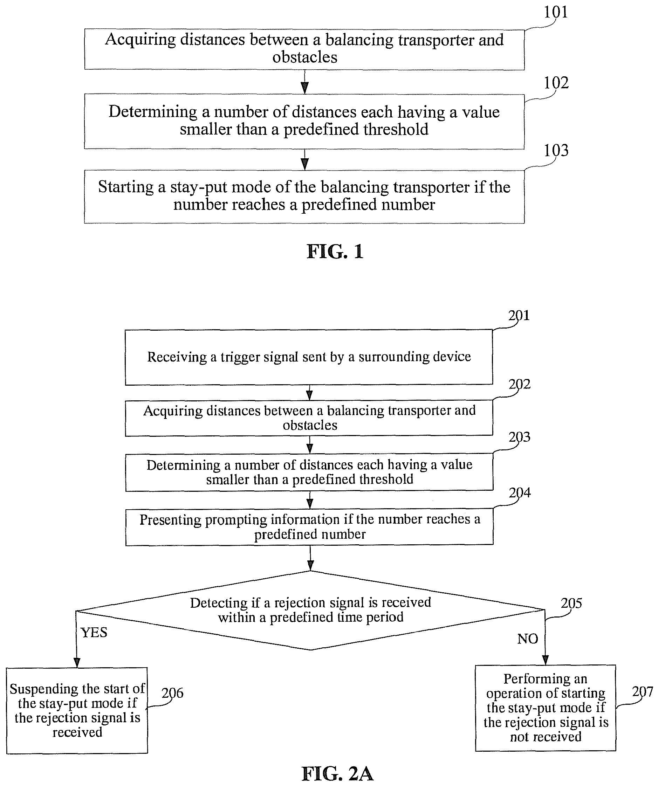

Fig. 1 is a flow diagram illustrating a method for making a balancing transporter stay put according to an exemplary embodiment. As shown in Fig. 1, this method for making a balancing transporter stay put may include the following steps.

In step 101, distances between the balancing transporter and obstacles around the balancing transporter are acquired.

In step 102, among the distances, a number of distances, each of which has a value smaller than a predefined threshold, is determined.

In step 103, if the number reaches a predefined number, a stay-put mode of the balancing transporter may be started, and the balancing transporter will be automatically kept balanced under the stay-put mode.

In general, with the method for making a balancing transporter stay put as provided in the present embodiment of the invention, by acquiring distances between the balancing transporter and obstacles around the balancing transporter, and automatically starting a stay-put mode of the balancing transporter if among the distances a number of distances each of which has a value smaller than a predefined threshold reaches a predefined number, the balancing transporter can be automatically kept balanced under the stay-put mode. Accordingly such a problem in the related art is solved that when a person enters a narrow space on a balancing transporter, it would be difficult for the person to keep the balancing transporter in a balanced state by waggling his or her body. As a result, a technical effect that a balancing transporter can be automatically kept balanced when the balancing transporter enters a narrow space is achieved.

Fig. 2A is a flow diagram illustrating a method for making a balancing transporter stay put according to another exemplary embodiment. As shown in Fig. 2A, the method for making a balancing transporter stay put may include the following steps.

In step 201, a trigger signal sent by a surrounding device is received, and the trigger signal is a signal that is sent to the balancing transporter by the surrounding device after the balancing transporter enters a predefined area, the predefined area being a communication area within which the surrounding device and the balancing transporter communicate.

A communication protocol may be preconfigured between the balancing transporter and the surrounding device. In this manner, as soon as the balancing transporter enters the communication area where the balancing transporter can communicate with the surrounding device, the balancing transporter may receive the trigger signal sent by the surrounding device. More particularly, the surrounding device may be a device capable of forming a closed space within which a person may be carried. The size of this closed space may be smaller than the size of the predefined area. For instance, the surrounding device may be an elevator, a subway car, or a train.

The balancing transporter's receiving the trigger signal sent by the surrounding device may include: the balancing transporter sending a detection signal, receiving a response signal fed back from the surrounding device, and taking the response signal as a trigger signal. Alternatively, the balancing transporter may receive a trigger signal which is actively sent by the surrounding device.

Suppose the surrounding device is an elevator, for example. As a user enters a predefined area on a balancing transporter when the balancing transporter can communicate with the elevator, the balancing transporter may receive a trigger signal sent by the elevator. The predefined area is in this case a communication area within which the elevator and the balancing transporter can communicate with each other.

In step 202, distances between the balancing transporter and obstacles around the balancing transporter are acquired.

The balancing transporter may acquire the distances to its surrounding obstacles in real time, or may acquire these distances after receiving the trigger signal of step 201. The present invention is not limited in this respect.

The balancing transporter may be provided with an infrared module, by which the distances to the obstacles around the balancing transporter may be measured. For instance, the balancing transporter may acquire the distances between itself and the obstacles in its four directions of front, back, left and right, via the infrared module. Using an infrared module to measure the distances to the obstacles is just an example of the embodiments; the balancing transporter may also measure the distances between itself and the obstacles by other measurement approaches, and the present invention is not limited in this respect.

In step 203, among the distances, a number of distances, each of which has a value smaller than a predefined threshold, may be calculated.

In step 204, if the number reaches a predefined number, prompting information is presented to prompt that the balancing transporter will enter the stay-put mode.

When the balancing transporter detects that the number of distances having values smaller than the predefined threshold reaches the predefined number, the balancing transporter may present the prompting information to prompt that the balancing transporter will enter the stay-put mode.

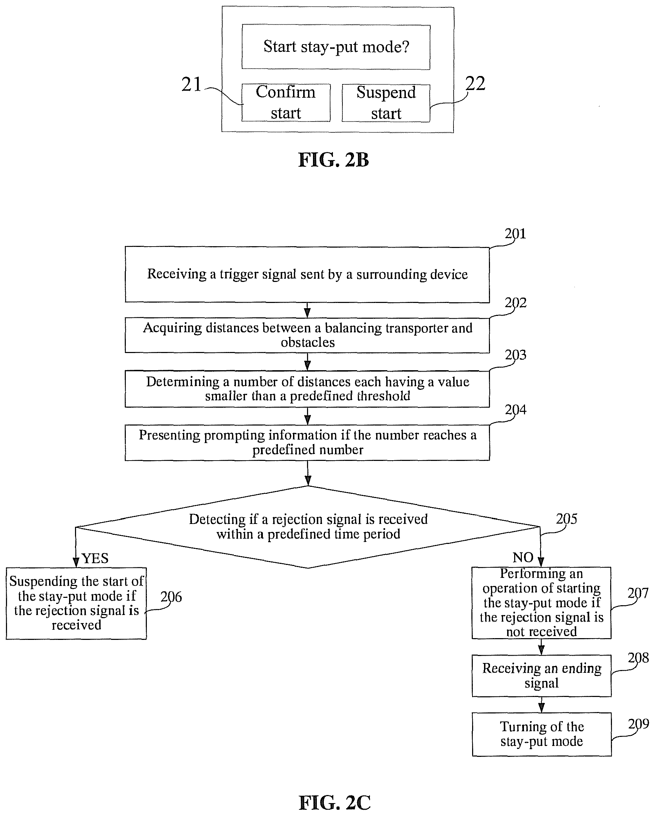

The balancing transporter may present this prompting information within an information presentation area in the balancing transporter, such as a display screen in a handle part of the balancing transporter, etc. The balancing transporter may also issue this prompting information through voice. Referring to Fig. 2B, for example, the balancing transporter may display "Start stay-put mode?" in the display screen. The balancing transporter may present the prompting information through both voice and display screen. For example, the balancing transporter may beep while displaying the prompting information as shown in Fig. 2B.

The predefined number may be an integer larger than or equal to 3. For example, if the balancing transporter detects that the distances between itself and obstacles in at least three directions are smaller than the predefined threshold, the balancing transporter may determine that it has entered an elevator, and the balancing transporter may present the prompting information at this moment.

In step 205, it is detected whether a rejection signal is received within a predefined time period. The rejection signal is used to indicate not to start the stay-put mode of the balancing transporter for the moment.

After presenting the prompting information, the balancing transporter may start up a timer and monitor operations of the user. Whether the rejection signal is received within the predefined time period is determined based on the monitored operations of the user. If the balancing transporter receives the rejection signal within the predefined time period, step 206 will be performed; otherwise, step 207 will be performed.

Referring to Fig. 2B again, after the prompting information is presented by the balancing transporter, the user may select option 21 of "Confirm start" if the user wants the balancing transporter to enter the stay-put mode, and may select option 22 of "Suspend start" if the user does not want the balancing transporter to enter the stay-put mode. Accordingly, the balancing transporter may receive a signal on the user's selection.

In step 206, the start of stay-put mode is suspended if the rejection signal is received.

If the balancing transporter receives the rejection signal within the predefined time period, it indicates that the user does not want the balancing transporter to enter the stay-put mode. At this time, the start of the balancing transporter's stay-put mode may be suspended. Alternatively, after receiving the rejection signal, the balancing transporter may start up a timer and for a preset period the stay-put mode will not be started.

In step 207, if the rejection signal is not received, an operation of starting the stay-put mode of the balancing transporter is performed.

If the balancing transporter does not receive the rejection signal within the predefined time period, the stay-put mode of the balancing transporter will be started.

In an embodiment, if the balancing transporter receives a confirmation signal to confirm the start of the stay-put mode, the balancing transporter may start the stay-put mode immediately; however, if the balancing transporter does not receive any signal within the predefined time period, the balancing transporter may start the stay-put mode at the end of the predefined time period. Under the stay-put mode, the balancing transporter may be automatically kept balanced.

This step may include the following two possible implementations.

As a first possible implementation, an auto-balancing system of the balancing transporter may be started.

The balancing transporter may start its auto-balancing system, so that the balancing transporter may be automatically kept balanced.

As a second implementation, a braking function of the balancing transporter may be activated.

After activating the braking function, the balancing transporter may be automatically kept balanced under the restriction of the braking function.

It is to be noted that step 201 is optional, and may be absent in practice. Moreover, in the illustrate embodiment, it is merely an example that step 201 is performed as the first step. Step 201 may be performed anywhere before step 207, and the present invention is not limited in this respect.

It is also to be noted that steps 204-206 are also optional. In practice, when the number of distances having values smaller than the predefined threshold reaches the predefined number, the balancing transporter may start the stay-put mode directly, i.e., performing step 207 directly; the present invention is not limited in this respect.

Referring to Fig. 2C, the method for making the balancing transporter stay put may include the following.

In step 208, an ending signal is received.

After the balancing transporter starts the stay-put mode, if the user wants to continue using this balancing transporter, the user may apply an ending signal to turn off the stay-put mode of the balancing transporter. Accordingly, the balancing transporter may receive this ending signal.

The balancing transporter may be provided with a physical button, which is used to turn off the stay-put mode. When the user wants to end the stay-put mode, the user may press this physical button, and the balancing transporter may take the received pressure signal as the ending signal. The balancing transporter may receive this ending signal through other approaches, and the present invention is not limited in this respect.

In step 209, after receiving the ending signal, the stay-put mode of the balancing transporter is ended.

After receiving the ending signal, the balancing transporter may turn off the stay-put mode. Subsequently, the user may keep the balance of the balancing transporter by waggling his or her body, and thus the balancing transporter may be normally manipulated.

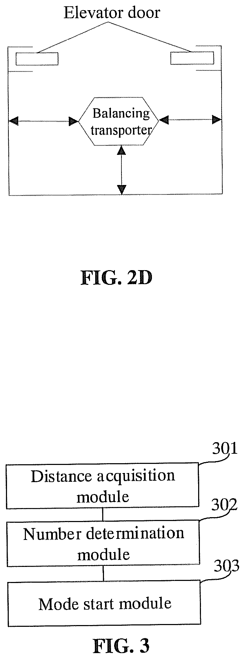

In an exemplary application scenario of the embodiments, after receiving a trigger signal sent by an elevator, a balancing transporter may measure the distances between itself and the obstacles around the balancing transporter via an infrared module. When a number of distances (each of which has a value smaller than a predefined threshold) among the measured distances of the balancing transporter reaches 3 (referring to Fig. 2D, as an example, the balancing transporter detects that the distances to the obstacles on its left side, right side, and back side are all smaller than a predefined threshold), it indicates that a user has entered the elevator on the balancing transporter. At this time, the balancing transporter may start a stay-put mode to be automatically kept balanced (in this manner, after the user riding the balancing transporter enters the elevator, the balancing transporter may start the stay-put mode before the close of the elevator, and the experience of the user is improved). Alternatively, before starting the stay-put mode, the balancing transporter may display prompting information for prompting the start of the stay-put mode of the balancing transporter through a display screen on a handle of the balancing transporter, and start the stay-put mode if a rejection signal is not received within a predefined time period. If the rejection signal has been received within the predefined time period, it indicates that the user is probably waiting outside the elevator and does not want to start the stay-put mode of the balancing transporter. The balancing transporter may then do not start the stay-put mode for the moment.

In general, with the method for making a balancing transporter stay put as provided in the present embodiment of the invention, by acquiring distances between the balancing transporter and the obstacles around the balancing transporter, and automatically starting a stay-put mode of the balancing transporter if among the distances a number of distances each of which has a value smaller than a predefined threshold reaches a predefined number, the balancing transporter can be automatically kept balanced under the stay-put mode. Accordingly such a problem in the related art is solved that when a person on a balancing transporter enters a narrow space, it would be difficult for the person to keep the balancing transporter in a balanced state by waggling his or her body. As a result, a technical effect that a balancing transporter can be automatically kept balanced when the balancing transporter enters a narrow space is achieved.

By starting the stay-put mode after receiving the trigger signal from the surrounding device, unnecessary start of the stay-put mode of the balancing transporter in some unnecessary scenarios is avoided and accordingly the user's normal use of the balancing transporter may not be disturbed. Meanwhile, the processing complexity may be reduced in the balancing transporter when the balancing transporter acquires the distances to the obstacles around the balancing transporter after receiving the trigger signal, rather than acquire these distances in real time.

The balancing transporter may start the stay-put mode once it is detected that among these distances the number of distances each of which has a value smaller than the predefined threshold reaches a predefined number, without the need of waiting for all the distances being smaller than the predefined threshold. As a result, the stay-put mode of the balancing transporter can be started promptly.

By presenting the prompting information before the balancing transporter starts the stay-put mode, and selecting to either suspend the stay-put mode or start the stay-put mode with the participation of the user, requirements of users may be better satisfied and according user experience may be improved.

Moreover, after the balancing transporter starts the stay-put mode, the user may turn off or end the stay-put mode of the balancing transporter when the user wants to manipulate the balancing transporter normally, and thus usage of the balancing transporter by the user can be made more convenient.

The following embodiments are devices that may be used to perform the methods disclosed in the above embodiments of the invention. The methods above may be referred to for any undisclosed details of the devices of the following embodiments.

Fig. 3 is a block diagram illustrating a device for making a balancing transporter stay put according to an exemplary embodiment. As shown in Fig. 3, this device may include, but is not limited to: a distance acquisition module 301, a number determination module 302, and a mode start module 303.

The distance acquisition module 301 is configured to acquire distances between the balancing transporter and obstacles around the balancing transporter.

The number determination module 302 is configured to determine, among the distances, a number of distances each of which has a value smaller than a predefined threshold.

The mode start module 303 is configured to start a stay-put mode of the balancing transporter if the number determined in the number determination module 302 reaches a predefined number, wherein the balancing transporter may be automatically kept balanced under the stay-put mode.

In general, with the device for making a balancing transporter stay put as provided in the present embodiment of the invention, by acquiring distances between the balancing transporter and obstacles around the balancing transporter, and automatically starting a stay-put mode of the balancing transporter if among the distances a number of distances each of which has a value smaller than a predefined threshold reaches a predefined number, the balancing transporter can be automatically kept balanced under the stay-put mode. Accordingly such a problem in the related art is solved that when a person on a balancing transporter enters a narrow space, it would be difficult for the person to keep the balancing transporter in a balanced state by waggling his or her body. As a result, a technical effect that a balancing transporter can be automatically kept balanced when the balancing transporter enters a narrow space is achieved.

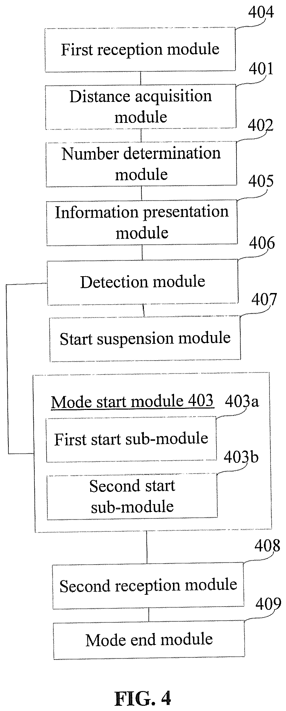

Fig. 4 is a block diagram illustrating a device for making a balancing transporter stay put according to another exemplary embodiment. As shown in Fig. 4, this device may include, but is not limited to: a distance acquisition module 401, a number determination module 402, and a mode start module 403.

The distance acquisition module 401 is configured to acquire distances between the balancing transporter and obstacles around the balancing transporter.

The number determination module 402 is configured to determine, among the distances, a number of distances each of which has a value smaller than a predefined threshold.

The mode start module 403 is configured to start a stay-put mode of the balancing transporter if the number determined in the number determination module 402 reaches a predefined number, wherein the balancing transporter may automatically be kept balanced under the stay-put mode.

Optionally, the device may further include: a first reception module 404, which is configured to receive a trigger signal sent by a surrounding device prior to the mode start module 403 starting the stay-put mode of the balancing transporter, the trigger signal being a signal sent to the balancing transporter by the surrounding device after the balancing transporter enters a predefined area, wherein the predefined area is a communication area within which the surrounding device and the balancing transporter communicate with each other.

Optionally, the device may further include: an information presentation module 405 configured to present prompting information, the prompting information being used to prompt that the balancing transporter will enter the stay-put mode; a detection module 406 configured to detect whether a rejection signal is received within a predefined time period, the rejection signal being used to indicate not to start the stay-put mode of the balancing transporter temporarily; and a start suspension module 407 configured to suspend the start of the stay-put mode if the detection module 406 detects that the rejection signal is received, wherein the mode start module 403 is further configured to perform an operation of starting the stay-put mode of the balancing transporter if the detection module 406 detects that the detection result of the detection module 406 is that the rejection signal is not received.

The mode start module 403 may include: a first start sub-module 403a configured to start an auto-balancing system of the balancing transporter; and/or a second start sub-module 403b configured to activate a braking function of the balancing transporter.

Optionally, the device may further include: a second reception module 408 configured to receive an ending signal; and a mode end module 409 configured to end the stay-put mode of the balancing transporter after the second reception module 408 receives the ending signal.

In general, with the device for making a balancing transporter stay put as provided in the present embodiment of the invention, by acquiring distances between the balancing transporter and obstacles around the balancing transporter, and automatically starting a stay-put mode of the balancing transporter if among the distances a number of distances each of which has a value smaller than a predefined threshold reaches a predefined number, the balancing transporter can be automatically kept balanced under the stay-put mode. Accordingly such a problem in the related art is solved that when a person on a balancing transporter enters a narrow space, it would be difficult for the person to keep the balancing transporter in a balanced state by waggling his or her body. As a result, a technical effect that a balancing transporter can be automatically kept balanced when the balancing transporter enters a narrow space is achieved.

By starting the stay-put mode after receiving the trigger signal from the surrounding device, unnecessary start of the stay-put mode of the balancing transporter in some unnecessary scenarios is avoided and accordingly the user's normal use of the balancing transporter may not be disturbed. Meanwhile, the processing complexity may be reduced in the balancing transporter when the balancing transporter acquires the distances to the obstacles around the balancing transporter after receiving the trigger signal, rather than acquire these distances in real time.

The balancing transporter may start the stay-put mode once it is detected that among these distances the number of distances each of which has a value smaller than the predefined threshold reaches a predefined number, without the need of waiting for all the distances being smaller than the predefined threshold. As a result, the stay-put mode of the balancing transporter can be started promptly.

By presenting the prompting information before the balancing transporter starts the stay-put mode, and selecting to either suspend the stay-put mode or start the stay-put mode with the participation of the user, requirements of users may be better satisfied and according the user experience may be improved.

Moreover, after the balancing transporter starts the stay-put mode, the user may turn off or end the stay-put mode of the balancing transporter when the user wants to manipulate the balancing transporter normally, and thus usage of the balancing transporter by the user can be made more convenient.

With respect to the devices in the above embodiments, the specific manners that the respective modules perform operations have been described in detail in the embodiments regarding the relevant methods, and will not be elaborated herein.

A device for making a balancing transporter stay put is provided in an exemplary embodiment of the invention. The device may implement the method for making a balancing transporter stay put as provided in the invention, and may include a processor and a memory for storing processor-executable instructions, wherein the processor is configured to: acquire distances between the balancing transporter and obstacles around the balancing transporter; determine, among the distances, a number of distances each of which has a value smaller than a predefined threshold; and start a stay-put mode of the balancing transporter if the number reaches a predefined number, the balancing transporter being automatically kept balanced under the stay-put mode.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for making a balancing transporter stay put, comprising acquiring (101, 202) distances between the balancing transporter and obstacles around the balancing transporter; **characterized in that** it comprises:
determining (102, 203), among the distances, a number of distances each of which has a value smaller than a predefined threshold; and
starting (103) a stay-put mode of the balancing transporter if the number reaches a predefined number, the balancing transporter being automatically kept balanced under the stay-put mode.

2. The method of claim 1, further comprising:
prior to starting (103) the stay-put mode of the balancing transporter, receiving (201) a trigger signal sent by a surrounding device, the trigger signal being a signal sent to the balancing transporter by the surrounding device after the balancing transporter enters a predefined area, wherein the predefined area is a communication area within which the surrounding device and the balancing transporter communicate with each other.

3. The method of claim 1, further comprising:
presenting (204) prompting information, the prompting information being used to prompt that the balancing transporter will enter the stay-put mode;
detecting (205) whether a rejection signal is received within a predefined time period, the rejection signal being used to indicate not to start the stay-put mode of the balancing transporter temporarily;
suspending (206) the start of the stay-put mode, if the rejection signal is received; and
performing (207) an operation of starting the stay-put mode of the balancing transporter, if the rejection signal is not received.

4. The method of claim 1, wherein the starting comprises:
starting an auto-balancing system of the balancing transporter; and/or
activating a braking function of the balancing transporter.

5. The method of any one of claims 1-4, further comprising:
receiving (208) an ending signal; and
ending (209) the stay-put mode of the balancing transporter, after receiving (208) the ending signal.

6. A device of making a balancing transporter stay put, comprising a distance acquisition module (301, 401) configured to acquire distances between the balancing transporter and obstacles around the balancing transporter; **characterized in that** it comprises:
a number determination module (302, 402) configured to determine, among the distances, a number of distances each of which has a value smaller than a predefined threshold; and
a mode start module (303, 403) configured to start a stay-put mode of the balancing transporter if the number reaches a predefined number, the balancing transporter being automatically kept balanced under the stay-put mode.

7. The device of claim 6, further comprising:
a first reception module (404) configured to receive a trigger signal sent by a surrounding device prior to starting the stay-put mode of the balancing transporter, the trigger signal being a signal sent to the balancing transporter by the surrounding device after the balancing transporter enters a predefined area, wherein the predefined area is a communication area within which the surrounding device and the balancing transporter communicate with each other.

8. The device of claim 6, further comprising:
an information presentation module (405) configured to present prompting information, the prompting information being used to prompt that the balancing transporter will enter the stay-put mode;
a detection module (406) configured to detect whether a rejection signal is received within a predefined time period, the rejection signal being used to indicate not to start the stay-put mode of the balancing transporter temporarily; and
a start suspension module (407) configured to suspend the start of the stay-put mode if the detection module (406) detects that the rejection signal is received,
wherein the mode start module (403) is further configured to perform an operation of starting the stay-put mode of the balancing transporter if the detection module (406) detects that the rejection signal is not received.

9. The device of claim 6, wherein the mode start module (403) comprises:
a first start sub-module (403a) configured to start an auto-balancing system of the balancing transporter; and/or
a second start sub-module (403b) configured to activate a braking function of the balancing transporter.

10. The device of any one of claims 6-9, further comprising:
a second reception module (408) configured to receive an ending signal; and
a mode end module (409) configured to end the stay-put mode of the balancing transporter after receiving the ending signal.

11. A device for making a balancing transporter stay put, comprising:
a processor; and
a memory for storing processor-executable instructions, wherein the processor is configured to acquire distances between the balancing transporter and obstacles around the balancing transporter; **characterized in that** it comprises:
determine, among the distances, a number of distances each of which has a value smaller than a predefined threshold; and
start a stay-put mode of the balancing transporter if the number reaches a predefined number, the balancing transporter being automatically kept balanced under the stay-put mode.

12. A computer program including instructions for executing the steps of a method for making a balancing transporter stay put according to any one of claims 1 to 5 when said program is executed by a computer.

13. A recording medium readable by a computer and having recorded thereon a computer program including instructions for executing the steps of a method for making a balancing transporter stay put according to any one of claims 1 to 5.

14. A balancing transporter comprising a device according to any one of claims 6 to 11.

## Patentansprüche

1. Verfahren zum Ermöglichen des An-Ort-und-Stelle-Bleibens eines einachsigen Fahrzeugs, welches das Erfassen (101, 202) von Entfernungen zwischen dem einachsigen Fahrzeug und Hindernissen in der Umgebung des einachsigen Fahrzeugs umfasst, **dadurch gekennzeichnet, dass** es umfasst:
Bestimmen (102, 203), unter den Entfernungen, einer Anzahl von Entfernungen, die jeweils einen Wert kleiner als eine zuvor festgelegte Schwelle haben, und
Starten (103) eines An-Ort-und-Stelle-Bleiben-Modus des einachsigen Fahrzeugs, falls die Anzahl eine zuvor festgelegte Anzahl erreicht, wobei das einachsige Fahrzeug im An-Ort-und-Stelle-Bleiben-Modus automatisch in der Balance gehalten wird.

2. Verfahren nach Anspruch 1, ferner umfassend:
vor dem Starten (103) des An-Ort-und-Stelle-Bleiben-Modus des einachsigen Fahrzeugs, Empfangen (201) eines Auslösesignals, das von einer Vorrichtung in der Umgebung gesendet wird, wobei das Auslösesignal ein Signal ist, das von der Vorrichtung in der Umgebung zu dem einachsigen Fahrzeug gesendet wird, nachdem das einachsige Fahrzeug in einen zuvor festgelegten Bereich einfährt, wobei der zuvor festgelegte Bereich ein Kommunikationsbereich ist, innerhalb dessen die Vorrichtung in der Umgebung und das einachsige Fahrzeug miteinander kommunizieren.

3. Verfahren nach Anspruch 1, ferner umfassend:
Präsentieren (204) von Aufforderungsinformationen, wobei die Aufforderungsinformationen verwendet werden, um dazu aufzufordern, dass das einachsige Fahrzeug in den An-Ort-und-Stelle-Bleiben-Modus eintritt,
Detektieren (205), ob innerhalb eines zuvor festgelegten Zeitraums ein Ablehnungssignal empfangen wird, wobei das Ablehnungssignal verwendet wird, um anzuzeigen, dass der An-Ort-und-Stelle-Bleiben-Modus des einachsigen Fahrzeugs vorübergehend nicht gestartet werden soll,
Aussetzen (206) des Starts des An-Ort-und-Stelle-Bleiben-Modus, falls das Ablehnungssignal empfangen wird, und
Ausführen (207) eines Startvorgangs des An-Ort-und-Stelle-Bleiben-Modus des einachsigen Fahrzeugs, falls das Ablehnungssignal nicht empfangen wird.

4. Verfahren nach Anspruch 1, wobei das Starten umfasst:
Starten eines automatischen Gleichgewichtssystems des einachsigen Fahrzeugs, und/oder
Aktivieren einer Bremsfunktion des einachsigen Fahrzeugs.

5. Verfahren nach einem der Ansprüche 1-4, ferner umfassend:
Empfangen (208) eines Beendigungssignals und
Beenden (209) des An-Ort-und-Stelle-Bleiben-Modus des einachsigen Fahrzeugs nach dem Empfangen (208) des Beendigungssignals.

6. Vorrichtung zum Ermöglichen des An-Ort-und-Stelle-Bleibens eines einachsigen Fahrzeugs, umfassend:
ein Entfernungserfassungsmodul (301, 401), das dafür konfiguriert ist, Entfernungen zwischen dem einachsigen Fahrzeug und Hindernissen in der Umgebung des einachsigen Fahrzeugs zu erfassen, **dadurch gekennzeichnet, dass** sie umfasst:
ein Anzahlbestimmungsmodul (302, 402), das dafür konfiguriert ist, unter den Entfernungen eine Anzahl von Entfernungen zu bestimmen, die jeweils einen Wert kleiner als eine zuvor festgelegten Schwelle haben, und
ein Modusstartmodul (303, 403), das dafür konfiguriert ist, einen An-Ort-und-Stelle-Bleiben-Modus des einachsigen Fahrzeugs zu starten, falls die Anzahl eine zuvor festgelegte Anzahl erreicht, wobei das einachsige Fahrzeug im An-Ort-und-Stelle-Bleiben-Modus automatisch in der Balance gehalten wird.

7. Vorrichtung nach Anspruch 6, ferner umfassend:
ein erstes Empfangsmodul (404), das dafür konfiguriert ist, ein Auslösesignal zu empfangen, das durch eine Vorrichtung in der Umgebung gesendet wird, bevor der An-Ort-und-Stelle-Bleiben-Modus des einachsigen Fahrzeugs gestartet wird, wobei das Auslösesignal ein Signal ist, das von der Vorrichtung in der Umgebung zu dem einachsigen Fahrzeug gesendet wird, nachdem das einachsige Fahrzeug in einen zuvor festgelegten Bereich einfährt, wobei der zuvor festgelegte Bereich ein Kommunikationsbereich ist, innerhalb dessen die Vorrichtung in der Umgebung und das einachsige Fahrzeug miteinander kommunizieren.

8. Vorrichtung nach Anspruch 6, ferner umfassend:
ein Informationspräsentationsmodul (405), das dafür konfiguriert ist, Aufforderungsinformationen zu präsentieren, wobei die Aufforderungsinformationen verwendet werden, um dazu aufzufordern, dass das einachsige Fahrzeug in den An-Ort-und-Stelle-Bleiben-Modus eintritt,
ein Detektionsmodul (406), das dafür konfiguriert ist zu detektieren, ob innerhalb eines zuvor festgelegten Zeitraums ein Ablehnungssignal empfangen wird, wobei das Ablehnungssignal verwendet wird, um anzuzeigen, dass der An-Ort-und-Stelle-Bleiben-Modus des einachsigen Fahrzeugs vorübergehend nicht gestartet werden soll, und
ein Startaussetzungsmodul (407), das dafür konfiguriert ist, den Start des An-Ort-und-Stelle-Bleiben-Modus auszusetzen, falls das Detektionsmodul (406) detektiert, dass das Ablehnungssignal empfangen wird,
wobei das Modusstartmodul (403) ferner dafür konfiguriert ist, einen Startvorgang des An-Ort-und-Stelle-Bleiben-Modus des einachsigen Fahrzeugs auszuführen, falls das Detektionsmodul (406) detektiert, dass das Ablehnungssignal nicht empfangen wird.

9. Vorrichtung nach Anspruch 6, wobei das Modusstartmodul (403) umfasst:
ein erstes Start-Submodul (403a), das dafür konfiguriert ist, ein automatisches Gleichgewichtssystem des einachsigen Fahrzeugs zu starten, und/oder
ein zweites Start-Submodul (403b), das dafür konfiguriert ist, eine Bremsfunktion des einachsigen Fahrzeugs zu aktivieren.

10. Vorrichtung nach einem der Ansprüche 6 - 9, ferner umfassend:
ein zweites Empfangsmodul (408), das dafür konfiguriert ist, ein Beendigungssignal zu empfangen, und
ein Modus-Beendigungsmodul (409), das dafür konfiguriert ist, den An-Ort-und-Stelle-Bleiben-Modus des einachsigen Fahrzeugs nach dem Empfangen des Beendigungssignals zu beenden.

11. Vorrichtung zum Ermöglichen des An-Ort-und-Stelle-Bleibens eines einachsigen Fahrzeugs, umfassend:
einen Prozessor, und
einen Speicher zum Speichern Prozessor-ausführbarer Instruktionen,
wobei der Prozessor dafür konfiguriert ist, Entfernungen zwischen dem einachsigen Fahrzeug und Hindernissen in der Umgebung des einachsigen Fahrzeugs zu erfassen, **dadurch gekennzeichnet, dass** sie umfasst:
Bestimmen, unter den Entfernungen, einer Anzahl von Entfernungen, die jeweils einen Wert kleiner als eine zuvor festgelegten Schwelle haben, und
Starten eines An-Ort-und-Stelle-Bleiben-Modus des einachsigen Fahrzeugs, falls die Anzahl eine zuvor festgelegte Anzahl erreicht, wobei das einachsige Fahrzeug im An-Ort-und-Stelle-Bleiben-Modus automatisch in der Balance gehalten wird.

12. Computerprogramm, das Instruktionen zum Ausführen der Schritte eines Verfahren enthält, das das An-Ort-und-Stelle-Bleiben eines einachsigen Fahrzeugs nach einem der Ansprüche 1 bis 5 ermöglicht, wenn das Programm durch einen Computer ausgeführt wird.

13. Aufzeichnungsmedium, das durch einen Computer gelesen werden kann und auf dem ein Computerprogramm aufgezeichnet ist, das Instruktionen zum Ausführen der Schritte eines Verfahren enthält, das das An-Ort-und-Stelle-Bleiben eines einachsigen Fahrzeugs nach einem der Ansprüche 1 bis 5 ermöglicht.

14. Einachsiges Fahrzeug, das eine Vorrichtung nach einem der Ansprüche 6 bis 11 umfasst.

## Revendications

1. Procédé pour immobiliser un transporteur à équilibrage, comprenant :
l'acquisition (101, 202) de distances entre le transporteur à équilibrage et des obstacles autour du transporteur à équilibrage ;
**caractérisé en ce qu'**il comprend :
la détermination (102, 203), parmi les distances, d'un certain nombre de distances ayant chacune une valeur inférieure à un seuil prédéfini ; et
le démarrage (103) d'un mode d'immobilisation du transporteur à équilibrage si le nombre atteint un nombre prédéfini, le transporteur à équilibrage étant automatiquement maintenu stabilisé dans le mode d'immobilisation.

2. Procédé selon la revendication 1, comprenant en outre :
avant le démarrage (103) du mode d'immobilisation du transporteur à équilibrage, la réception (201) d'un signal de déclenchement envoyé par un dispositif environnant, le signal de déclenchement étant un signal envoyé au transporteur à équilibrage par le dispositif environnant après que le transporteur à équilibrage est entré dans une zone prédéfinie, laquelle zone prédéfinie est une zone de communication à l'intérieur de laquelle le dispositif environnant et le transporteur à équilibrage communiquent l'un avec l'autre.

3. Procédé selon la revendication 1, comprenant en outre :
la présentation (204) d'une information de sollicitation, l'information de sollicitation étant utilisée pour inviter le transporteur à équilibrage à entrer en mode d'immobilisation ;
la détection (205) de la réception éventuelle d'un signal de rejet dans une période de temps prédéfinie, le signal de rejet étant utilisé pour indiquer de ne pas démarrer le mode d'immobilisation du transporteur à équilibrage temporairement ;
la suspension (206) du démarrage du mode d'immobilisation si le signal de rejet est reçu ; et
la mise en oeuvre (207) d'une opération de démarrage du mode d'immobilisation du transporteur à équilibrage si le signal de rejet n'est pas reçu.

4. Procédé selon la revendication 1, dans lequel le démarrage comprend :
le démarrage d'un système d'auto-stabilisation du transporteur à équilibrage ; et/ou
l'activation d'une fonction de freinage du transporteur à équilibrage.

5. Procédé selon l'une quelconque des revendications 1 à 4, comprenant en outre :
la réception (208) d'un signal de fin ; et
la fin (209) du mode d'immobilisation du transporteur à équilibrage, après réception (208) du signal de fin.

6. Dispositif pour immobiliser un transporteur à équilibrage, comprenant :
un module d'acquisition de distance (301, 401) configuré pour acquérir des distances entre le transporteur à équilibrage et des obstacles autour du transporteur à équilibrage ;
**caractérisé en ce qu'**il comprend :
un module de détermination de nombre (302, 402) configuré pour déterminer, parmi les distances, le nombre de distances ayant chacune une valeur inférieure à un seuil prédéfini ; et
un module de démarrage de mode (303, 403) configuré pour démarrer un mode d'immobilisation du transporteur à équilibrage si le nombre atteint un nombre prédéfini, le transporteur à équilibrage étant automatiquement maintenu stabilisé dans le mode d'immobilisation.

7. Dispositif selon la revendication 6, comprenant en outre :
un premier module de réception (404) configuré pour recevoir un signal de déclenchement envoyé par un dispositif environnant avant le démarrage du mode d'immobilisation du transporteur à équilibrage, le signal de déclenchement étant un signal envoyé au transporteur à équilibrage par le dispositif environnant après que le transporteur à équilibrage est entré dans une zone prédéfinie, laquelle zone prédéfinie est une zone de communication à l'intérieur de laquelle le dispositif environnant et le transporteur à équilibrage communiquent l'un avec l'autre.

8. Dispositif selon la revendication 6, comprenant en outre :
un module de présentation d'information (405) configuré pour présenter une information de sollicitation, l'information de sollicitation étant utilisée pour inviter le transporteur à équilibrage à entrer en mode d'immobilisation ;
un module de détection (406) configuré pour détecter si un signal de rejet est reçu dans une période de temps prédéfinie, le signal de rejet étant utilisé pour indiquer de ne pas démarrer le mode d'immobilisation du transporteur à équilibrage temporairement ; et
un module de suspension de démarrage (407) configuré pour suspendre le démarrage du mode d'immobilisation si le module de détection (406) détecte que le signal de rejet est reçu,
dans lequel le module de démarrage de mode (403) est en outre configuré pour effectuer une opération de démarrage du mode d'immobilisation du transporteur à équilibrage si le module de détection (406) détecte que le signal de rejet n'est pas reçu.

9. Dispositif selon la revendication 6, dans lequel le module de démarrage de mode (403) comprend :
un premier sous-module de démarrage (403a) configuré pour démarrer un système d'auto-stabilisation du transporteur à équilibrage ; et/ou
un deuxième sous-module de démarrage (403b) configuré pour activer une fonction de freinage du transporteur à équilibrage.

10. Dispositif selon l'une quelconque des revendications 6 à 9, comprenant en outre :
un deuxième module de réception (408) configuré pour recevoir un signal de fin ; et
un module de fin de mode (409) configuré pour arrêter le mode d'immobilisation du transporteur à équilibrage après réception du signal de fin.

11. Dispositif pour immobiliser un transporteur à équilibrage, comprenant
un processeur ; et
une mémoire pour stocker des instructions exécutables par le processeur,
dans lequel le processeur est configuré pour acquérir des distances entre le transporteur à équilibrage et des obstacles autour du transporteur à équilibrage ;
**caractérisé en ce qu'**il comprend :
la détermination, parmi les distances, d'un certain nombre de distances ayant chacune une valeur inférieure à un seuil prédéfini ; et
le démarrage d'un mode d'immobilisation du transporteur à équilibrage si le nombre atteint un nombre prédéfini, le transporteur à équilibrage étant automatiquement maintenu stabilisé dans le mode d'immobilisation.

12. Programme informatique comprenant des instructions pour exécuter les étapes d'un procédé pour immobiliser un transporteur à équilibrage selon l'une quelconque des revendications 1 à 5 quand ledit programme est exécuté par un ordinateur.

13. Support d'enregistrement lisible par un ordinateur et sur lequel est enregistré un programme informatique comprenant des instructions pour exécuter les étapes d'un procédé pour immobiliser un transporteur à équilibrage selon l'une quelconque des revendications 1 à 5.

14. Transporteur à équilibrage comprenant un dispositif selon l'une quelconque des revendications 6 à 11.
